# EUROPEAN PATENT SPECIFICATION

(11) **EP 0 370 524 B1**
(45) Date of publication and mention of the grant of the patent: **10.11.1993**
(21) Application number: 89121750.7
(22) Date of filing: 24.11.1989
(51) Int. Cl.: F16F 13/00, B29C 33/12, B29C 67/18, B29C 45/14

(54) **Vibration isolating device and method for manufacturing same**
Schwingungsisolierungsvorrichtung und Verfahren zu deren Herstellung
Dispositif d'isolation des vibrations et son procédé de fabrication

(30) Priority: 25.11.1988 JP 297894/88
(43) Date of publication of application: 30.05.1990
(73) Proprietor: Bridgestone Corporation, Tokyo 104 (JP)
(72) Inventor: Ishiyama, Tatsuro, Yokohama-shi Kanagawa-ken (JP)
(74) Representative: Huss, Carl-Hans, Dipl.-Ing.

(56) References cited:
- EP-A- 0 324 457
- EP-A- 0 332 901
- EP-A- 0 342 680
- DE-A- 2 737 898
- US-A- 4 693 456
- PATENT ABSTRACTS OF JAPAN vol. 10, no. 238 (M-508)(2294) 16 August 86
- PATENT ABSTRACTS OF JAPAN vol. 12, no. 83 (M-677)(2930) 16 March 88
- PATENT ABSTRACTS OF JAPAN vol. 13, no. 170 (M-817)(3518) 21 April 89

## Description

The present invention relates to a vibration isolating device as described in claim 1.

Among the conventional vibration isolating devices of this kind, a vibration isolating device is well known which comprises an annular vibration absorbing main body made of an elastic material containing a natural rubber having a low loss factor and which is dished at the top thereof and also has attached on the outer circumference thereof a clamping ring to which a top plate is fixed by caulking, a receptacle having an arch-like sectional shape being attached on the inner bottom circumference of the vibration absorbing main body, and a flexible membrane disposed along the bottom surface of the receptacle and having the circumferential edge sandwiched between the receptacle and a bottom plate. There is formed in the top of the receptacle an orifice which provides a communication between the liquid room formed above the concavity of the vibration absorbing main body and the liquid room between the receptacle and flexible membrane (JP-A-61/110 344 and JP-A-61/70 240).

The above mentioned conventional vibration isolating device is not of a so-called bush type structure having an inner and outer cylinder, and its structure is not suitable for improving the damping effect by lengthening the orifice.

JP-A-62 224 746 discloses a vibration isolating device according to the preamble of claim 1. In said pre-known device a liquid room is divided into two chambers and an orifice communicating both chambers is formed between the outer circumference of an intermediate cylindrical case and an outer cylinder.

The object of the present invention is to provide a bush-type vibration isolating device having a flexible membrane which is not degraded even at a high temperature and having a long communication orifice. In addition, a method for manufacturing the rubber cushion is disclosed.

This problem is solved by the invention some embodiments of which are described in the following by way of example with reference to the drawings.

In the drawings
Fig. 1 is a sectional view taken along the line A-A in Fig. 2, showing a first embodiment of vibration isolating device according to the present invention;
Fig. 2 is a sectional view taken along the line B-B in Fig.1;
Fig. 3 is a sectional view taken along the line C-C in Fig. 4 showing a second embodiment;
Fig. 4 is a sectional view taken along the line D-D in Fig. 3;
Fig. 5 is a sectional view showing the injection mold used in a method according to the present invention; and
Fig. 6 is a sectional view showing the injection mold used in another method according to the present invention.

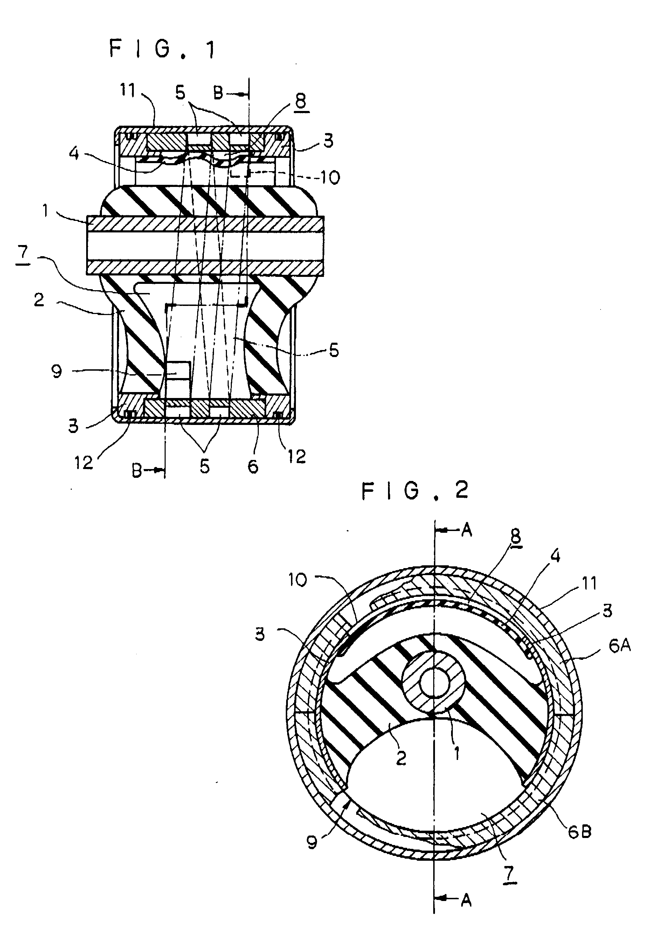

Fig. 1 shows a first embodiment of a vibration isolating device according to the present invention, in which an inner cylinder 1 is inserted in a vibration absorbing main body 2 attached to a intermediate cylindrical case 3 by vulcanizing. Also a flexible membrane 4 is attached to the intermediate cylindrical case 3 by vulcanizing. The vibration absorbing main body 2 is made of an elastic material containing a natural rubber having a low loss factor, while the flexible membrane 4 is made of an elastic material containing a rubber having a heat- and ozone-resistent property. For the vibration absorbing main body 2, a material containing natural rubber as base and butadiene as additive is suitable. For the flexible membrane 4, a rubber highly resistant against ozone and low in permeability such as butyric rubber, EPT rubber or a natural rubber to which EPT rubber is added, is suitable. There is provided outside the intermediate cylindrical case 3 a metallic cylinder 6 in which orifice 5 is formed, and the metallic cylinder 6 has formed therein ports 9 and 10 for communication with a main chamber 7 and an auxiliary chamber 8, respectively (see Fig. 2). The metallic cylinder 6 consists of two blocks. They are fitted around the intermediate cylindrical case. The metallic cylinder 6 and intermediate cylindrical case 3 are inserted inside an outer cylinder 11, and they are close-fitted to each other by drawing the outer cylinder 11 to a smaller diameter. There is provided between the intermediate cylindrical case 3 and outer cylinder 11 an O-ring 12 for an improved sealing. Also, after the metallic cylinder 6 and intermediate cylindrical case 3 is press-fitted in the outer cylinder 11, both ends of the outer cylinder 11 are caulked to prevent the cylinder 6 and case 3 from coming out.

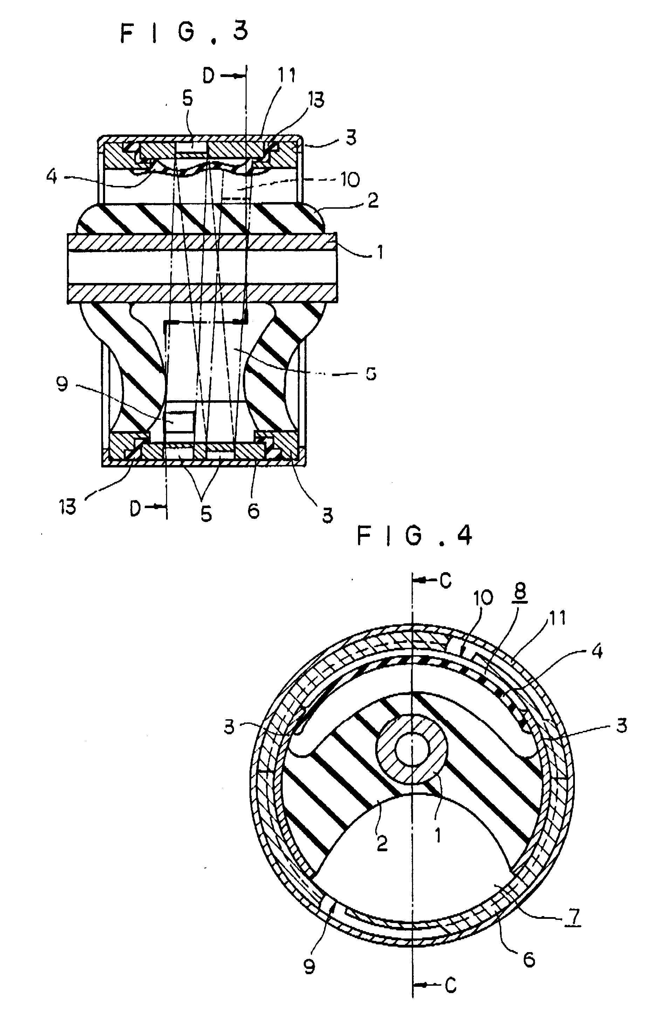

In the second embodiment according to the present invention shown in Figs. 3 and 4, a rubber seal 13 made of the same kind of rubber as the flexible membrane 4 is provided on the outer circumference of the intermediate cylindrical case 3 instead of the O-ring 12 used in the first embodiment. The rest of the vibration isolating device structure is the same as in Figs. 1 and 2, and so the vibration isolating device according to the second embodiment will not be described any further.

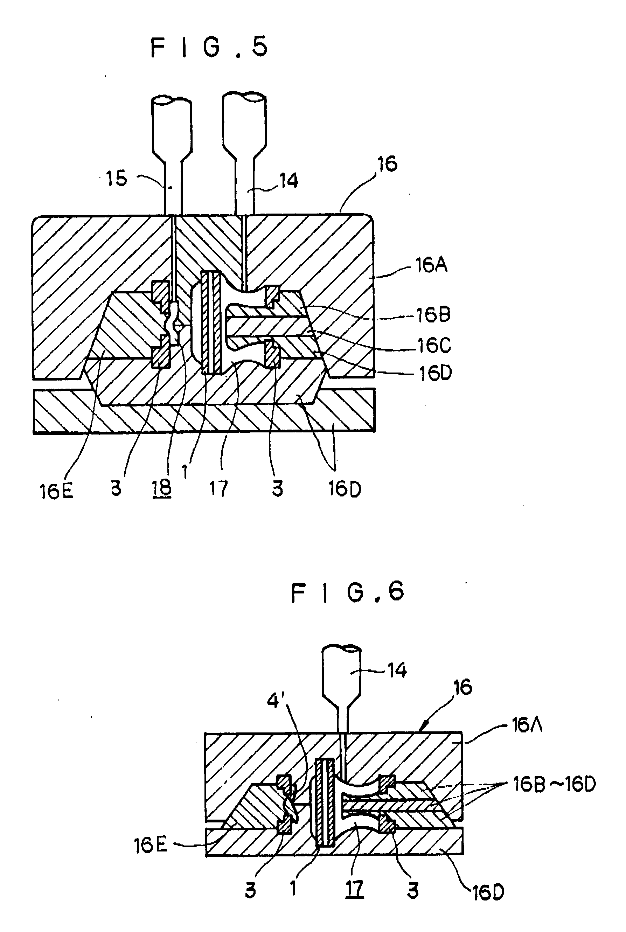

Fig. 5 shows a method for manufacturing the vibration isolating device according to the present invention. A material for the vibration absorbing main body 2 and a material for the flexible membrane 4 are injected into cavities 17 and 18, respectively, in an injection mold 16 from nozzles 14 and 15, respectively, of an injection molder (not shown). The injection mold 16 is fastened with the inner cylinder 1 and the cylindrical case 3 set in the injection mold 16, and the different materials are injected into the main cavity 17 and into the auxiliary cavity 18, respectively, from the nozzles 14 and 15, respectively. The vibration absorbing main body 2 and flexible membrane 4 thus molded by the so-called double injection molding are taken out from their respective cavities 17 and 18. The metallic cylinder 6 in which the orifice is formed is assembled to the outer circumference of the intermediate cylindrical case 6, and the intermediate cylindrical case 3 and the metallic cylinder 6 are inserted into the outer cylinder 11. By drawing the outer cylinder 11 to a smaller diameter, the intermediate cylindrical case 3 and metallic cylinder 6 are close-fitted to each other. A hollow space defined mainly by the vibration absorbing main body 2 and flexible membrane 4 is charged with a liquid. This space is called "liquid room". The liquid room is divided into two chambers 7 and 8 being communicated through an orifice 5. The injection mold 16 consists of an upper block 16A, middle blocks 16B to 16E and a lower block 16D.

In the method for manufacturing the vibration isolating device according to the present invention shown in Fig. 6, the inner cylinder 1 and cylindrical case 3 are set inside the injection mold 16, while a semi-finished product 4' not yet vulcanized but generally shaped in the form of the flexible membrane is set in the cavity for the flexible membrane of a rubber having a heat- and ozone-resistant property at the other part of the intermediate cylindrical case 3. Therefore, injection is made into the cavity 17 alone from the nozzle 14 to mold the vibration absorbing main body 2. The flexible membrane 4 is molded taking a longer time than the vibration absorbing main body 2. So a semifinished product 4' is set beforehand and molded for a time until the vibration absorbing main body 2 is molded in the cavity 17. Namely, in case the flexible membrane 4 is molded from, for example, a butyric rubber, a semifinished product 4' which can be molded and vulcanized in about 5 to 6 minutes is to be previously set since the time for molding of a rubber containing mainly a natural rubber for the vibration absorbing main body in the cavity 17 may be 5 to 6 minutes whereas the time for molding and vulcanizing of the butyric rubber is 15 to 20 minutes. In the manufacturing method shown in Fig. 6, such an arrangement is made that the flexible membrane 4 and vibration absorbing main body 2 can be completely vulcanized at the same time.

As has been described in the foregoing, the flexible membrane in the vibration isolating device according to the present invention and which is in contact with air has an improved durability and since a long orifice can be provided in the metallic cylinder inside the intermediate cylindrical case, the damping function can be improved. Also, according to the present invention, the vibration absorbing main body and flexible membrane can be molded by a double injection molding using an injection mold, or only the vibration absorbing main body can be injected molded with a semifinished product of the flexible membrane set beforehand, whereby a vibration isolating device can be manufactured easily and rapidly.

## Claims

1. A vibration isolation device including an outer cylinder (11), an inner cylinder (1), a vibration absorbing main body (2) made of an elastic material containing a natural rubber having a low loss factor and a flexible membrane (4) made of an elastic material containing a rubber, further comprising an intermediate cylindrical case (3), coaxial with said outer cylinder (11), to which said vibration absorbing main body (2) and said flexible membrane (4) are attached by vulcanization; said inner cylinder (1) being inserted in said vibration absorbing main body (2); said vibration absorbing main body (2), together with said flexible membrame (4) and said outer cylinder (11), defining a hollow space being filled with a liquid so as to constitute a liquid room; said liquid room being subdivided into a main chamber (7) and an auxiliary chamber (8); said main chamber (7) being bound by said vibration absorbing main body (2) and said auxiliary chamber (8) being bound by said flexible membrane (4); and said two chambers (7,8) being communicated through an orifice (5),
characterized in that
said intermediate cylindrical case (3) comprises two cylindrical ring portions with the same outer diameter and axially spaced from each other, said flexible membrane has heat- and ozone-resistant properties, said orifice (5) is formed by carving a groove in the outer circumference of a metallic cylinder (6) , said metallic cylinder (6) being held in position by said intermediate cylindrical case (3) and being located between said two rings, and said metallic cylinder (6) and said intermediate cylindrical case (3) are press-fitted in said outer cylinder (11).

2. A method for manufacturing a vibration isolation device, comprising the following steps:
clamping an injection mould (16) with an intermediate cylindrical case (3), comprising two cylindrical ring portions with the same outer diameter and axially spaced from each other, and an inner cylinder (1) set inside said case (3) and having its axis of symmetry parallel to the axis of said case (3); said mould (16) being such that a main cavity (17) and an auxiliary cavity (18) are defined, said main cavity (17) surrounding said inner cylinder (1) and extending so as to bridge said two ring portions and said auxiliary cavity (18) also extending so as to bridge said ring portions; injecting an elastic material containing a natural rubber into the main cavity (17) and an elastic material containing a rubber having a heat- and ozone-resistant property into the auxiliary cavity (18);
thereby forming a vibration absorbing main body (2) in said main cavity (17) and a flexible membrane (4) in said auxiliary cavity (18);
fitting metallic cylinder (6) having the same external diameter as said case (3) in between said two ring portions, said metallic cylinder (6) having a groove carved in its external surface;
press-fitting said case (3) and said metallic cylinder (6) into an outer cylinder (11), so that two chambers (7,8) result, both of said chambers being limited by said metallic cylinder (6), one of said chambers (7) being in addition limited by said vibration absorbing main body (2), while the other said chamber (8) is in addition limited by said flexible membrane (4);
said chambers (7,8) being communicated through an orifice (5) constituted by said groove;
and, finally, charging a liquid into said chambers (7,8).

3. A method for manufacturing a vibration isolation device, comprising the following steps:
clamping an injection mould (16) with an intermediate cylindrical case (3), comprising two cylindrical ring portions with the same outer diameter and axially spaced from each other, and an inner cylinder (1) set inside said case (3) and having its axis of symmetry parallel to the axis of said case (3); said mould (16) being such that a main cavity (17) and an auxiliary cavity (18) are defined, said main cavity (17) surrounding said inner cylinder (1) and extending so as to bridge said two ring portions and said auxiliary cavity (18) also extending so as to bridge said two ring portions; a semifinished product, not yet vulcanized, containing a rubber having a heat- and ozone-resistant property being placed so as to approximately fill said auxiliary cavity (18); injecting an elastic material containing a natural rubber into the main cavity (17);
thereby forming a vibration absorbing main body (2) in said main cavity (17) and a flexible membrane (4) in said auxiliary cavity (18);
fitting a metallic cylinder (6) having the same external diameter as said case (3) in between said two ring portions, said metallic cylinder (6) having a groove carved in its external surface;
press-fitting said case (3) and said metallic cylinder (6) into an outer cylinder (11), so that two chambers (7,8) result both of said chambers being limited by said metallic cylinder (6), one of said chambers (7) being in addition limited by said vibration absorbing main body (2), while the other said chamber (8) is in addition limited by said flexible membrane (4); said chambers (7,8) being communicated through an orifice (5) constituted by said groove;
and, finally, charging a liquid into said chambers (7,8).

## Patentansprüche

1. Schwingungsisolierungsvorrichtung mit einem Außenzylinder (11), einem Innenzylinder (1), einem Schwingungen absorbierenden Hauptkörper (2) aus einem Naturgummi geringen Verlustfaktors enthaltenden elastischem Material und einer flexiblen Membran (4) aus einem Gummi enthaltenden elastischen Material, ferner bestehend aus einem koaxial zu dem Außenzylinder (11) liegenden zylindrischen Zwischengehäuse (3), an dem der Schwingungen absorbierende Hauptkörper (2) und die flexible Membran (4) durch Vulkanisation befestigt sind, wobei der Innenzylinder (1) in den Schwingungen absorbierenden Hauptkörper (2) eingesetzt ist und der Schwingungen absorbierende Hauptkörper (2) zusammen mit der flexiblen Membran (4) und dem Außenzylinder (11) einen mit Flüßigkeit gefüllten, einen Flüßigkeitsraum bildenden Hohlraum definieren, welcher Flüßigkeitsraum in eine Hauptkammer (7) und eine Hilfskammer (8) unterteilt ist, wobei die Hauptkammer (7) durch den Schwingungen absorbierenden Hauptkörper (2) und die Hilfskammer (8) durch die flexible Membran (4) begrenzt sind und beide Kammern (7,8) durch eine Öffnung (5) verbunden sind, dadurch **gekennzeichnet**
daß das zylindrische Zwischengehäuse (3) aus zwei axial im Abstand voneinander angeordneten zylindrischen Ringteilen mit gleichem Außendurchmesser besteht, die flexible Membran hitze- und ozonbeständige Eigenschaften aufweist, die Öffnung (5) durch Einschneiden einer Nut in den Außenumfang des Metallzylinders (6) geformt ist, der Metallzylinder (6) in seiner Lage durch das zylindrische Zwischengehäuse (3) gehalten und dabei zwischen dessen beiden Ringen fixiert ist, und daß der Metallzylinder (6) und das zylindrische Zwischengehäuse (3) in den Außenzylinder (11) eingepreßt sind.

2. Verfahren zur Herstellung einer Schwingungsisolationsvorrichtung mit folgenden Schritten:
Zusammenspannen einer Spritzform (16) mit eingelegtem, aus zwei zylindrischen, im Abstand zueinander liegenden Ringteilen gleichen Außendurchmessers bestehendem zylindrischen Zwischengehäuse (3) und innerhalb desselben liegenden Innenzylinder (1), dessen Symmetrieachse parallel zur Achse des Gehäuses (3) verläuft, wobei die Form (16) eine Hauptformmulde (17) und eine Hilfsformmulde (18) so definiert, daß die Hauptformmulde (17) den Innenzylinder (1) umgibt und sich so erstreckt, daß sie ebenso wie die Hilfsformmulde (18) die beiden Ringteile überbrückt, wonach ein Naturgummi enthaltendes Material in die Hauptformmulde (17) und ein Gummi mit hitze- und ozonbeständigen Eigenschaften enthaltendes Material in die Hilfsformmulde (18) eingespritzt wird und dadurch einen Schwingungen absorbierenden Hauptkörper (2) in der Hauptformmulde (17) und eine flexible Membran (4) in der Hilfsformmulde (18) ausformt, wonach der Metallzylinder (6) mit demselben Außendurchmesser wie das Gehäuse (3) und mit einer eingeschnittenen Nut (5) in seiner Außenfläche zwischen den beiden Ringteilen eingepreßt und dann das Gehäuse (3) und der Metallzylinder (6) in einem Außenzylinder (11) eingepreßt werden, so daß zwei Kammern (7,8) entstehen, die beide durch den Metallzylinder (6) begrenzt sind, und die Kammer (7) zusätzlich durch den Schwingungen absorbierenden Hauptkörper (2) begrenzt ist, während die andere Kammer (8) zusätzlich durch die flexible Membran (4) begrenzt ist, welche beiden Kammern (7,8) durch eine durch die Nut gebildete Öffnung (5) miteinander verbunden sind, wonach schließlich eine Flüßigkeit in die Kammern (7,8) eingefüllt wird.

3. Verfahren zur Herstellung einer Schwingungsisolationsvorrichtung mit folgenden Schritten:
Zusammenspannen einer Spritzform (16) mit eingelegtem, aus zwei zylindrischen, im Abstand Zueinander liegenden Ringteilen gleichen Außendurchmessers bestehendem zylindrischen Zwischengehäuse (3) und innerhalb desselben liegenden Innenzylinder (1), dessen Symmetrieachse parallel zur Achse des Gehäuses (3) verläuft, wobei die Form (16) eine Hauptformmulde (17) und eine Hilfsformmulde (18) so definiert, daß die Hauptformmulde (17) den Innenzylinder (1) umgibt und sich so erstreckt, daß sie ebenso wie die Hilfsformmulde (18) die beiden Ringteile überbrückt, wonach ein noch nicht vulkanisierter, halbfertiger, hitze- und ozonbeständigen Gummi enthaltender Körper in die Hilfsformmulde (18) und diese ungefähr ausfüllend eingelegt wird und danach elastisches, Naturgummi enthaltendes Material in die Hauptformmulde (17) eingespritzt wird, wodurch ein Schwingungen absorbierender Hauptkörper (2) in der Hauptformmulde (17) und eine flexible Membran (4) in der Hauptformmulde (18) ausgeformt werden, wonach ein Metallzylinder (6) mit demselben Außendurchmesser wie das Gehäuse (3) und mit einer in die Außenfläche eingeschnittenen Nut in seine Außenfläche zwischen den beiden Ringteilen eingepreßt und dann das Gehäuse (3) und der Metallzylinder (6) in einem Außenzylinder (11) eingepreßt werden, so daß zwei Kammern (7,8) entstehen die beide durch den Metallzylinder (6) begrenzt sind, und die Kammer (7) zusätzlich durch den Schwingungen absorbierenden Hauptkörper (2) begrenzt ist, während die andere Kammer (8) zusätzlich durch die flexible Membran (4) begrenzt wird, welche beiden Kammern (7,8) durch eine durch die Nut gebildete Öffnung (5) miteinander verbunden sind, wonach schließlich eine Flüßigkeit in die Kammern (7,8) eingefüllt wird.

## Revendications

1. Un dispositif d'isolation des vibrations comprenant un cylindre externe (11), un cylindre interne (1), un corps principal d'absorption des vibrations (2) réalisé en une matière élastique contenant un caoutchouc naturel présentant un faible facteur de perte et une membrane souple (4) réalisée en une matière élastique contenant un caoutchouc, comprenant en outre un boitier cylindrique intermédiaire (3) coaxial audit cylindre externe (11), auquel ledit corps principal d'absorption des vibrations (2) et ladite membrane souple (4) sont reliés par vulcanisation ; ledit cylindre interne (1) étant inséré dans ledit corps principal d'absorption des vibrations (2) ; ledit corps d'absorption des vibrations (2) en même temps que ladite membrane souple (4) et ledit cylindre externe (11) définissant un espace creux rempli d'un liquide afin de constituer une chambre de liquide ; ladite chambre de liquide étant subdivisée en une chambre principale (7) et une chambre auxiliaire (8) ; ladite chambre principale (7) étant limitée par ledit corps principal d'absorption des vibrations (2) et ladite chambre auxiliaire (8) étant limitée par ladite membrane souple (4) ; et lesdites deux chambres (7, 8) étant amenées à communiquer par un orifice (5),
caractérisé en ce que
ledit boîtier cylindrique intermédiaire (3) comprend deux parties de couronne cylindriques présentant le même diamètre externe et écartées l'une de l'autre le long de leur axe, ladite membrane souple présente des propriétés de résistance à la chaleur et à l'ozone, ledit orifice (5) est formé en découpant une gorge dans la circonférence externe d'un cylindre métallique (6), ledit cylindre métallique (6) étant maintenu en place par ledit boitier cylindrique intermédiaire (3) et étant placé entre les deux couronnes, et ledit cylindre métallique (6) ainsi que ledit boîtier cylindrique intermédiaire (3) sont engagés à force dans ladite chambre externe (11).

2. Un procédé pour la fabrication d'un dispositif d'isolation des vibrations comprenant les opérations suivantes :
serrer un moule d'injection (16) avec un boîtier cylindrique intermédiaire (3) comprenant deux parties de couronne cylindriques présentant le même diamètre externe et écartées l'une de l'autre le long de leur axe et un cylindre interne (1) placé à l'intérieur dudit boîtier (3) et présentant son axe de symétrie parallèle à l'axe dudit boîtier (3) ; ledit moule (16) étant tel qu'une cavité principale (17) et une cavité auxiliaire (18) soient définies, ladite cavité principale (17) entourant ledit cylindre interne (1) et s'étendant de manière à ponter lesdites deux parties de couronne et ladite cavité auxiliaire (18) s'étendant également de manière à ponter lesdites parties de couronne ;
injecter une matière élastique contenant un caoutchouc naturel dans la cavité principale (17) et une matière élastique contenant un caoutchouc présentant une propriété de résistance à la chaleur et à l'ozone dans ladite cavité auxiliaire (18) ;
former ainsi un corps principal d'absorption des vibrations (2) dans ladite chambre principale (17) et une membrane souple (4) dans ladite cavité auxiliaire (18) ;
adapter un cylindre métallique (6) ayant le même dismètre externe que ledit boîtier (3) entre lesdites deux parties de couronne, ledit cylindre métallique (6) présentant une gorge découpée dans sa surface externe ;
engager à force ledit boîtier (3) et ledit cylindre métallique (6) dans un cylindre externe (11) de manière à former deux chambres (7, 8), lesdites deux chambres étant limitées par ledit cylindre métallique (6), l'une (7) desdites chambres étant en outre limitée par ledit corps principal d'absorption des vibrations (2), tandis que l'autre (8) desdites chambres est en outre limitée par ladite membrane souple (4) ; lesdites chambres (7, 8) étant amenées à communiquer par un orifice (5) constitué par ladite gorge ;
et finalement charger lesdites chambres (7, 8) d'un liquide.

3. Un procédé de fabrication d'un dispositif d'isolation des vibrations comprenant les opérations suivantes :
serrer un moule d'injection (16) avec un boîtier cylindrique intermédiaire (3), comprenant deux parties de couronne cylindriques présentant le même diamètre externe et écartées l'une de l'autre le long de leur axe, et un cylindre interne (1) placé à l'intérieur dudit boîtier (3) et ayant son axe de symétrie parallèle à l'axe dudit boîtier (3) ; ledit moule (16) étant tel qu'une cavité principale (17) et une cavité auxiliaire (18) soient définies, ladite cavité principale (17) entourant ledit cylindre interne (1) et s'étendant de manière à ponter lesdites deux parties de couronne et ladite cavité auxiliaire (18) s'étendant également de manière à ponter lesdites deux parties de couronne : un produit semi-fini, non encore vulcanisé, contenant un caoutchouc présentant une propriété de résistance à la chaleur et à l'ozone étant placé de manière à remplir approximativement ladite cavité auxiliaire (18) ;
injecter une matière élastique contenant un caoutchouc naturel dans la chambre principale (17) ;
former ainsi un corps principal d'absorption des vibrations (2) dans ladite cavité principale (17) et une membrane souple (4) dans ladite cavité auxiliaire (18) ;
adapter un cylindre métallique (6) présentant le même diamètre externe que ledit boîtier (3) entre lesdites deux parties de couronne, ledit cylindre métallique (6) présentant une gorge découpée dans sa surface externe ;
engager à force ledit boîtier (3) et ledit cylindre métallique (6) dans un cylindre externe (11), de manière à former deux chambres (7, 8), lesdites deux chambres étant limitées par ledit cylindre métallique (6), l'une (7) desdites chambres étant en outre limitée par ledit corps principal d'absorption des vibrations (2), tandis que l'autre (8) desdites chambres est en outre limitée par ladite membrane souple (4) ; lesdites chambres (7, 8) étant amenées à communiquer par un orifice (5) constitué par ladite gorge ;
et finalement charger lesdites chambres (7, 8) d'un liquide.
